# EUROPEAN PATENT APPLICATION

(11) **EP 0 927 684 A1**
(43) Date of publication of application: **07.07.1999**
(21) Application number: 98124843.8
(22) Date of filing: 30.12.1998
(51) Int. Cl.: B65B 19/22, B65G 47/71

(54) **Conveying device, in particular for discharging, for packets, or similar, in particular in cigarette packing machines**

(30) Priority: 02.01.1998 IT SV980001
(71) Applicant: SASIB TOBACCO S.p.A., 40128 Bologna (IT)
(72) Inventor: Spada, Valter, 40043 Marzabotto (BO) (IT)
(74) Representative: Karaghiosoff, Giorgio Alessandro, Dipl.-Phys.

(57) **Abstract**

Conveying device, in particular for discharging, for packets, or similar, in cigarette packing machines, comprising an operating unit (I), for example a so-called wheel forming the packet (P) by means of wrapping a label of envelope or a preformed blank around the product such as cigarettes or similar if necessary previously wrapped in an inner envelope, the said unit (1) delivers at the exit a sequence of packets (P), particularly of cigarette packets and conveying means to discharge the packets. According to the invention, the conveying means of discharge have means (2, 4, 5, 9, 9',11) for dividing the stream of the packets coming out of the operating unit of production or of supply (1) into two streams (11) of packets which are contemporaneous and perfectly synchronized with each other. In particular, these are constituted by three transfer wheels (2, 9', 9) one of which serves simultaneously and in a synchronized manner the two following and respective conveyors (11).

## Description

The invention relates to a conveying device, in particular for discharging, for packets, or similar, in particular in the cigarette packing machines, comprising an operating unit, for example a so-called wheel forming the packet by means of wrapping a label envelope or a preformed blank around a product like cigarettes or similar, if necessary previously wrapped in an inner envelope, the said unit supplying at the exit end a sequence of packets of cigarettes and conveying means to discharge the packets.

The invention is based on the problem to realize conveying means, in particular for discharging from the packing machine and eventually for transferring to a following machine, like a cellophane wrapping machine, or of other type, which is commensurate with the high production speed of the finished packets, extends itself over a relative long run and such as to guarantee the drying of the glue which holds together the overlapping flaps of the blank or of the label of the wrapping folded in a manner to form the packet and which at the same time is compact and performs the function of a storage unit to allow to adjust the frequency of loading the packets into a following operating machine to perform further packaging operations, as for example to the cited cellophane wrapping machine, to the frequency of production in and delivery of the packets form the packing machine. Furthermore, the invention aims at a conveyor in particular of discharge, which operates at high speed, that is corresponding to the frequency of production or of feeding of the packets, all thanks to relatively simple means which can be easily activated in synchrony with the operating units upstream and which do not excessively increase the mass to be driven by means of the main drive motor of the operating machine to which they are linked or do not require too high working speeds.

The invention attains the above aims with a conveying device of the type described above, which has means for dividing the stream of the packets coming out of the operating unit of production or of supply into two streams of packets contemporaneous and perfectly synchronized with each other.

The device has two parallel lines of delivery which are served simultaneously by transfer means of the packets, which are loaded contemporaneously with the actual packets.

An advantageous form of execution of the invention provides a first transfer wheel equipped with a plurality of seating pockets distributed equidistant along the periphery of the same, means for feeding one at a time a finished packet into a respective seating pocket of the first transfer wheel and two following second transfer wheels these also equipped with a plurality of peripheral seatings for the packets, each of which partially overlaps the first wheel and is driven in a synchronized manner with the same, so that the two second wheels of transfer arrive contemporaneously each with its own seating pocket in position of alignment with a different full seating of the first transfer wheel, while pusher means are provided for the two second wheels which discharge the packet from the first transfer wheel to the associated pocket of the corresponding second transfer wheel, and while the two second wheels have a diverse angular position substantially coinciding with the entry of further conveying means.

Advantageously, with regards to the main direction of travel of the packets, the wheels are arranged with their axis oriented parallel to said direction or the said axis are substantially oriented parallel to the direction of loading of the packets into the actual wheels.

The two second wheels are oriented parallel to the first transfer wheel and are advantageously both arranged towards the same side of the first transfer wheel, in particular or preferably in direction of the top side.

When on a prearranged relatively limited circumference a maximum number of seating pockets are provided, one obtains a positioning in where one of the two second wheels overlaps on one face of the first wheel, while the other of the two second wheels overlaps the opposite face of the first wheel, thus ensuring identical displacement strokes of the packets from the first wheel to each of the two second transfer wheels.

When the second transfer wheels of equal radius or of larger radii have less seating pockets, then they do not overlap each other to obtain the required geometry of coincidence with the seating pockets of the first transfer wheel and in this case, the said two transfer wheels can be arranged overlapping the same face of the first wheel of transfer. While in the first case one obtains an optimum use of space, in that one maximizes the number of seating pockets keeping the radial dimension of the wheel limited, in the second case one obtains the advantage to have conveyors that act in the same direction for both the second wheels of transfer.

The second transfer wheels each supply preferably a second conveyor with the function of a storage and drying unit of the glue which binds the blank in the shape wrapped around the product.

Advantageously, the two further conveyors, each of which is associated with only one of the two second transfer wheels are parallel with each other and are substantially oriented in direction to the one of motion of the packets from the operating unit of production to the first wheel and from this to the second wheel.

In a preferred form of execution the two storage conveyors, are constituted by pairs of parallel conveyor bands which form between them a channel housing the packets, in where the packets adhere with opposite sides to each of the two bands.

The device according to the inventions allows the stream of packets coming out of the operating unit of production to be divided into two streams parallel with each other and supplied contemporaneously, with a minimum of transferring elements which are relatively simple and inexpensive. The two streams thus obtained extend themselves over a track according to at least two components of perpendicular motion between each other and allow the quantity of packets unloaded per unit of time to be kept constant, reducing, that is substantially cutting, the operating and conveying speed of the packets in half. This entails an increase of the dwell time of the packets in the conveying track and consequently the possibility to reach the required drying times without having to lengthen the conveying track because of it keeping the space to a minimum.

As evidenced by the above, while the first transfer wheel must necessarily operate at a speed corresponding to the pace of unloading or supply of the packets by the operating unit upstream of the same, the two second wheels and consequently the two storage conveyors served by the same operate at a reduced speed, that is substantially halved, in that each of them picks up only one packet at the same time as the other, thus two packets at a time are discharged from the first wheel.

According to the above it is also clear that the device according to the invention is not limited to its use as discharge conveyor, but can be utilized for transferring any given type of product of suitable shape from one to two operating units following each other, or also as a feeder for operating units of the same parallel type operating at the same time. The invention presents further improvements which are part of the subclaims.

The features of the invention and the advantages derived from the same are better understood from the following description of a non-limiting executive example illustrated in the attached drawings, in where:

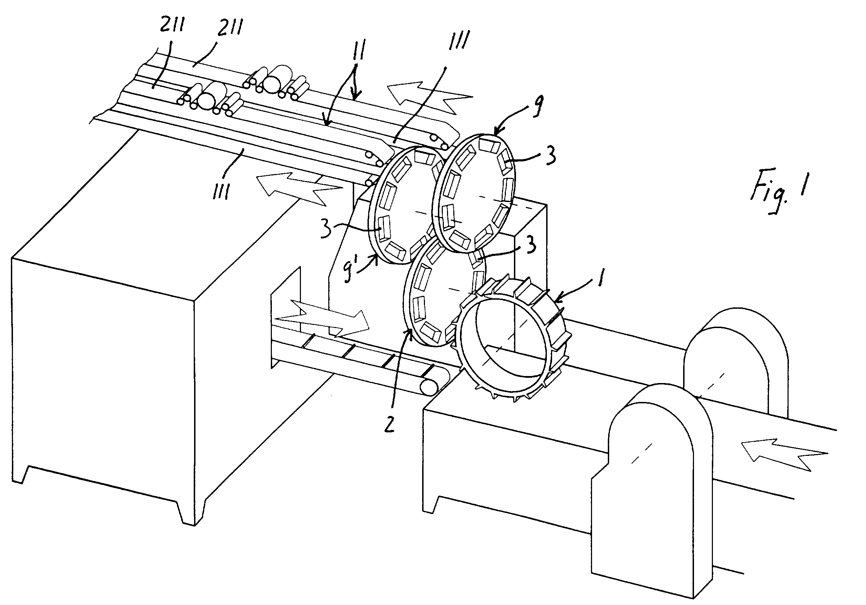

The Fig. 1 illustrates a schematic perspective view of the device according to the invention.

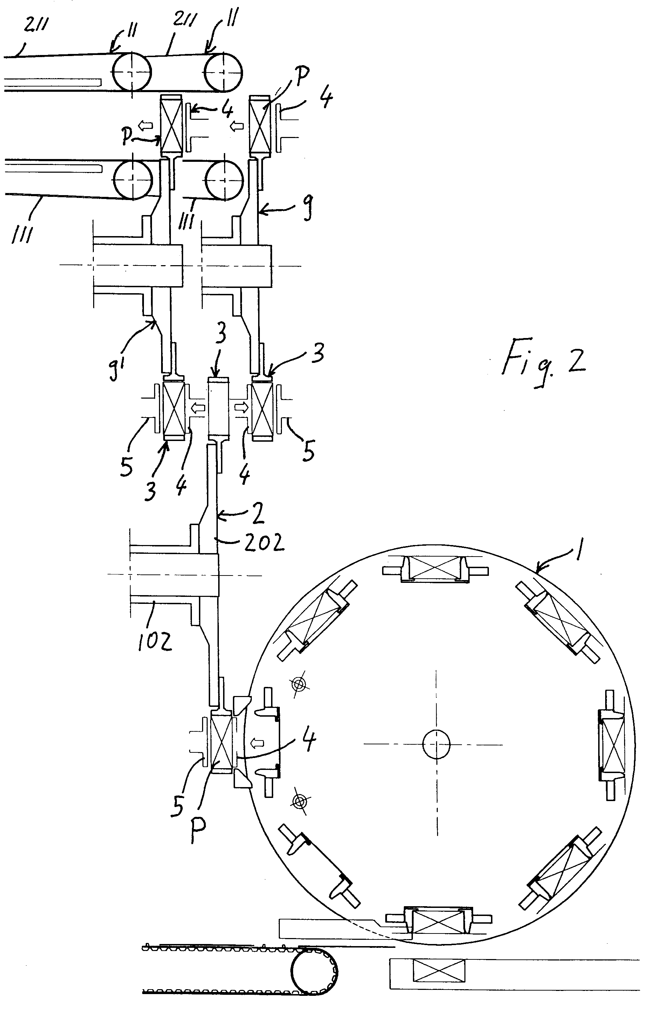

The Fig. 2 illustrates a schematic lateral elevation view of the device according to the invention.

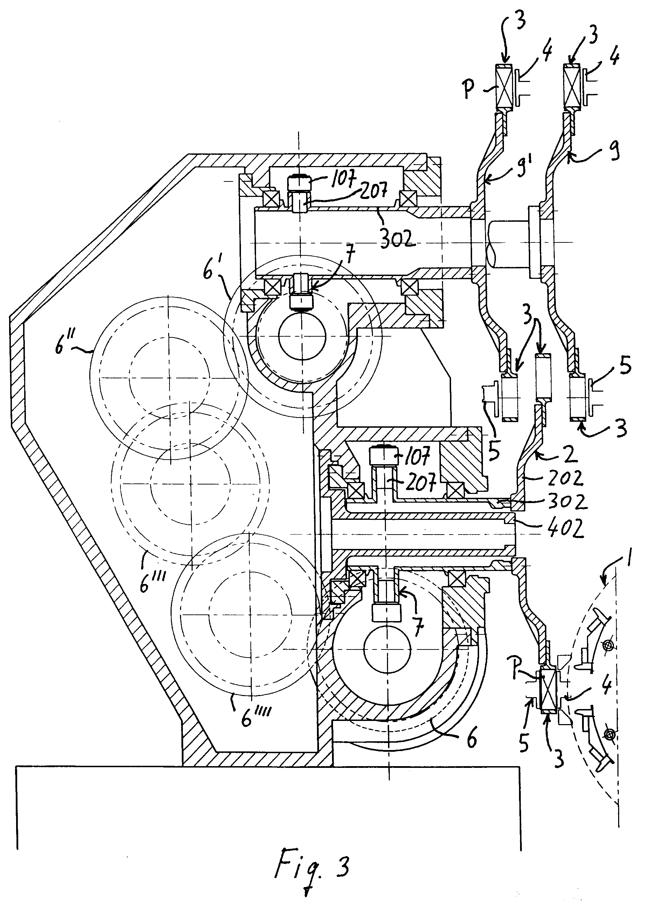

The Fig. 3 illustrates a cross-section of the device according to the preceding Figures along a diametral plane of the axis of the first transfer wheel.

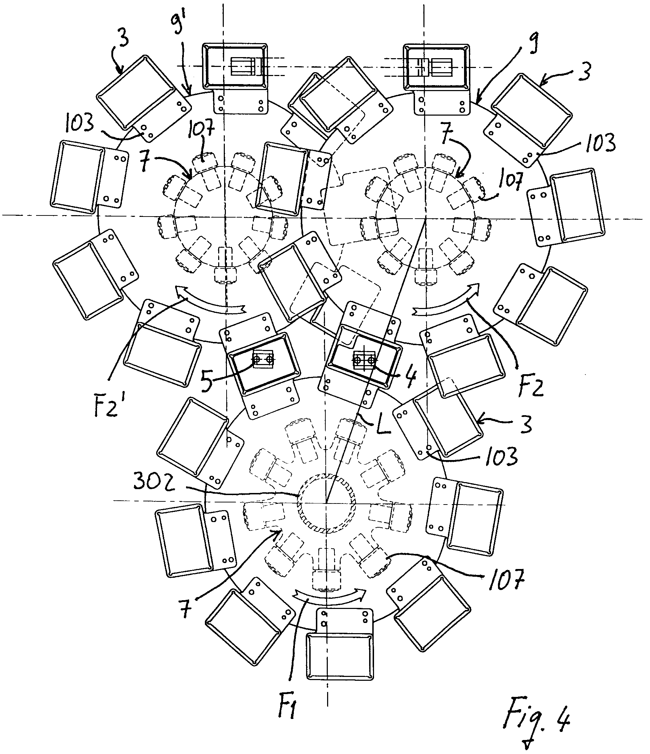

The Fig. 4 illustrates a front view of the three transfer wheels.
The Fig. 5 illustrates a detail relative to one of the pusher or follower means of the packets from one to the other of the transfer wheels and from the same to the discharge conveyor bands.
The Fig. 6 illustrates an enlarged detail of a seating pocket of a transfer wheel.
The Fig. 7 is a view similar to Fig. 4, in where the transfer wheels have a lesser number of seating pockets.
Fig. 8 is a perspective view of a further embodiment according to the invention.
Fig. 9 and 10 are two partially cut side views of the device according to fig. 8 in two different positions of the cursor.
Fig. 11 is a view of the device according to the preceding figures 8 to 10 in direction of the discharge conveyors.

With reference to the Figures a device according to the invention has on the exit side a cigarette packet forming wheel 1 which revolves around a horizontal axis perpendicular to the plane of the drawing of a first transfer wheel 2.

The forming wheel 1 is of a known type and has in combination means for folding around a pack formed by a group of cigarettes wrapped in an internal envelope of the finished packet, a further label, in particular a blank from which the external wrapper of the packet is originated which can be hard or soft. The forming wheels in themselves are known and widely used and the same is not shown in detail as it is not subject of the present invention. As a matter of fact instead of the forming wheel 1 any type of operating unit can be foreseen which supply at the exit a series of objects, such as packets of cigarettes, or similar.

The transfer wheel 2 is fitted revolving around an axis 102 which is perpendicular to the axis of the forming wheel 1 in such a way, whereby the same can in succession bring one seating pocket at the time into position of transfer, that is in a position coinciding with a pocket of the forming wheel 1.

The transfer wheel 2 has in fact on the outside a circle of seating pockets 3 distributed equidistant along the periphery of the same.

The transfer of the packets from the forming wheel 1 to the transfer wheel 2 takes place by means of pairs of pusher-followers 4 and 5 which close in a gentle manner and sufficient to hold each packet between them and move it into the seating pocket 3 of the first transfer wheel 2, moving together in the axial direction of the said first transfer wheel 2 and in the radial direction of the forming wheel. The axis of the first forming wheel 2, is therefore oriented in direction of advancement of the packet taken from the forming wheel 1.

The seating pockets 3 of the packets on the first forming wheel are constituted by annular elements in form of a frame which surround the packet along its periphery and they have form and dimension corresponding to the shape of the packet, that is to the peripheral outline of the front sides of the same. The seating pockets 3 are completely open on both sides associated with the front sides of the packet, allowing for the entry and exit independently from one or the other open side of the pockets 3. The pockets 3 are fixed to the periphery of a disc 202 which forms the first transfer wheel 2, in particular thanks to a peripheral tab 103 which is bolted against a face of the wheel 2 by means of screws or bolts engaging in threaded holes made in the disc 202. The disc 202 is flanged on the front end of a tubular hub shaft 302 which in its turn is mounted revolving on a stationary axis 5 carried cantilevered on the frame of the machine.

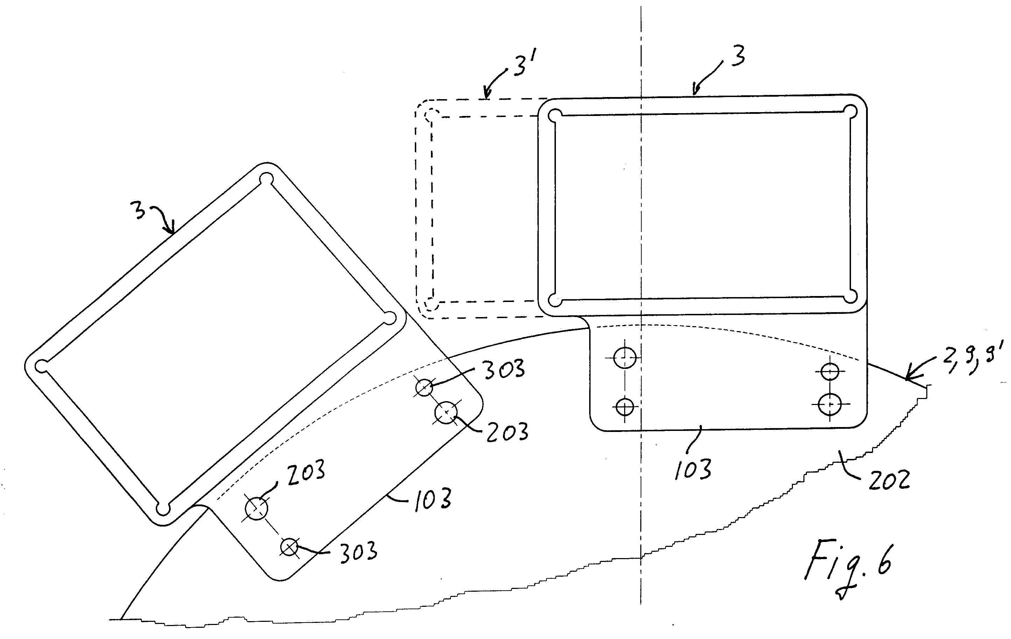

With reference in particular to Fig. 6, the pockets 3 are fixed with the tab 103 by means of screws 203 and locating dowels 303 on the peripheral ring of the face of the disc 202 thus allowing an easy replacement to accommodate the different packet sizes. Furthermore, in the Fig. 6, it becomes evident that the arrangement of the packets is centered with regards the line L of conjunction of the center of the first transmission wheel 1 and the centers of the second transmission wheels 9, 9' as far as it concerns the longest cigarette size indicated with 3', while the shortening of the pocket to accommodate cigarette packets with the shorter standard length is carried out only on one side of the said line of conjunction, so that the pocket 3 illustrated with a continuous line is foreseen for packets for shorter cigarettes, and turns out arranged eccentrically with regards to said line. Also the tab 103 is arranged eccentrically. That is to guarantee the management of the variable dimensions of the pockets which allows to keep the radius of the wheel as small as possible and also to maintain a fixed reference of alignment of the pockets 3 of the three transfer wheels corresponding to only one radial side in this case the side of the pockets 3 indicated with 203 and in this way avoid at a size change having also to provide for an adjustment or change of the synchronization of the steps of advancement of the three transfer wheels. This side will always have the same angular position in condition of alignment of the pockets 3 of the two second transfer wheels 9, 9' with the pockets of the first transfer wheel 2 independently from the size of the same. Furthermore the fixed reference defined by only one radial side of the pocket 3 allows to determine in a firm manner the position of coincidence of the three wheels for transferring the packets from one to the other of the same. The said positions will always be coincidental for each size with regards to the radial side of reference of the pockets 3. In this way also the position of the pairs of pusher and follower does not result easy to determine and is always the same for all sizes. In the example illustrated, the forming wheel and the first transfer wheel 2 are driven in steps of rotation in direction of the arrow F1. With regards to the first transfer wheel, the drive in steps is carried out thanks to a rotary cam 107 with which engage a ring of rollers 7 carried by the hub shaft 302. The ring of rollers is in form of a star and has a plurality of radial axes 207 which are provided in a number corresponding to the one of the seating pockets and the said axes each carrying one roller 107. The cam for instance can have a vaguely elicoidal profile and engages one pair of rollers at a time, exerting a desmodromic effect. The rotating cam 6 is connected by means of a drive chain not illustrated in detail, as this device is widely used in machines of this type to a drive unit, or a main motor.

Two further second transfer wheels 9, 9' are associated with the first transfer wheel which rotate around parallel axes with regards to the axis of the first transfer wheel 2 and the axes of which are arranged equidistant from the axis of the first transfer wheel 2. The two second transfer wheels 9, 9' are counterrotating as indicated by the arrows F2, F2' that is one wheel in the direction in agreement with the first transfer wheel 2 and the other in the opposite direction. The axes of the three wheels are therefore positioned at the vertices of an isosceles triangle and the distance and the relative position of each of the two wheels 9, 9' from the first transfer wheel 2 is such, that for each step of rotation one pocket of each of the second transfer wheels 9, 9' comes to coincide perfectly with one of the pockets of the first transfer wheel 2 and that is contemporaneously for both the second transfer wheels 9, 9'.

In particular, the three transfer wheels 2, 9, 9' are arranged axially staggered to each other and in such a way that each of the two second wheels 9, 9' is positioned facing a corresponding face of the first transfer wheel 2, while the ring of seating pockets 3 overlap each other in the intermediate section between the three wheels.

The three transfer wheels 2, 9, 9' are furthermore positioned relative to each other in such a way, that the pockets 3 of the two second transfer wheels 9, come to position themselves contemporaneously aligned with two pockets 3 of the first transfer wheel 2 which are adjacent one to the other and which are positioned on the two sides of the median plane of the first transfer wheel 2 being intermediate to the axes of the two second transfer wheels 9, 9'.

The second transfer wheels 9, 9' are made in a manner analogous to the first transfer wheel 2 and are themselves supported and driven in the same manner. Also in this case, rotary cams 6' and a coaxial star of rollers rotating around radial axes are provided which engage with the substantially elicoidal cam 6'. The cam 6' derives its motion as shown with 6, 6''' and 6'''' from the cam 6 for the first transfer wheel 2, however a drive ratio is provided which reduces the speed of rotation of the two second transfer wheels 9, 9' with regards to the one of the first wheel. As a matter fact two packets are contemporaneously discharged each time from the first transfer wheel 2 which are loaded one on one and the other on the other of the two second transfer wheels 9, 9'. Therefore the first transfer wheel 2 must carry out two steps of advancement, while the two second transfer wheels 9, 9' carry out only one step of advancement.

In a different angular position, substantially in a position diametrically opposite to the one where the second transfer wheels 9, 9' receive the corresponding packets P' from the first transfer wheel, a discharge conveyor 11 is provided for each transfer wheel 9, 9'.

Each discharge conveyor is constituted by a pair of opposite conveyor bands 111, 211, parallel to each other and which are driven around end pulleys of which at least one end is motorized. The two bands 111, 211 are distanced in a measure substantially corresponding to the dimensions of the packet in direction of the two opposite ends which come into contact with the two bands 111, 211.

The two discharge conveyors 11, thus form two parallel channels which extend themselves in a direction parallel to the one of the transfer of the packets from the forming wheel 1 to the first transfer wheel 2, and from this one to the two second transfer wheels 9. 9' and from these to said conveyors 11.

The packets are transferred from the second transfer wheels 9, 9' to the conveyors 11 thanks to pairs of pusher followers analogous to what happens for transferring the same from the forming wheel 1 to the first transfer wheel 2 and from this one to the second transfer wheels 9, 9'.

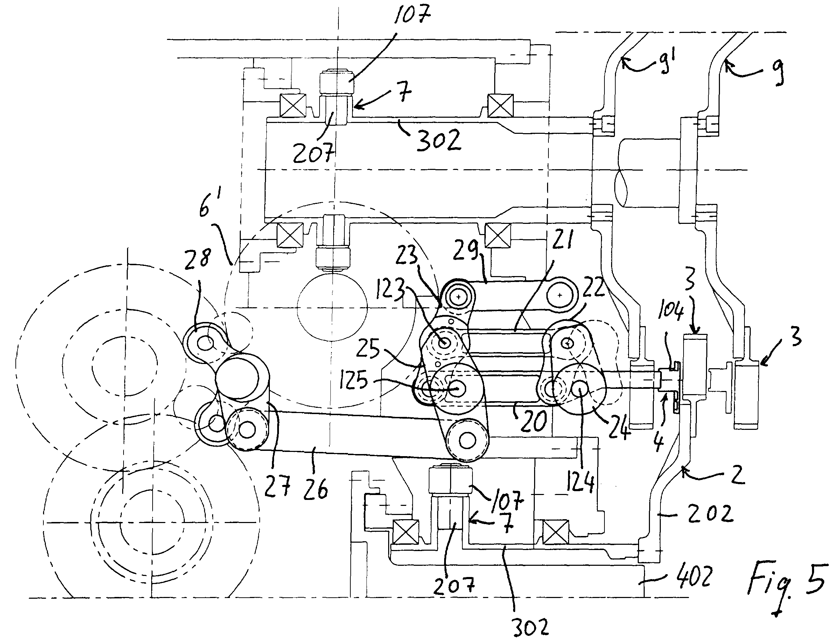

The pushers 4 and the followers 5 are formed by a pusher head 104, 105 mounted on the end of a rod 20 which is oriented in a direction parallel to the one of the rectilinear advancement of the packet and whose motion parallel to itself in the direction of transfer/following is obtained thanks to an articulated parallelogram system, in particular of an articulated pentalateral. An example of said pushers or followers is illustrated in Fig. 5.

An articulated quadrilateral has two parallel rods 20, 21 articulated to each other thanks to rocker arms 22, 23. The front rocker arm 22 with reference to its outward stroke is articulated in its turn to an end arm 24 which is hinged at its other end to a stationary fulcrum indicated with 124. The rear connecting arm 23 is articulated similarly to the front arm 22 to a further drive arm 25 which in its central section is oscillating around a stationary fulcrum 125 and which extends itself beyond the same on the side opposite to the one of articulation to the rear connecting arm 23, being hinged to a drive rod 26. The drive rod 26 carries by means of a further rocker arm 27 a pair of rollers 28 engaging with a cam which derives its rotary motion from the cinematic drive chain of the transfer wheels 2, 9, 9', thus ensuring the perfect synchronization of the motion of the pushers 4 and of the followers 5 with the steps of advancement of the actual transfer wheels 2, 9, 9'. Furthermore, the connecting arm 23 extends itself beyond the median fulcrum 123 of articulation to the rod 21 and is with the said projecting extremity articulated to an oscillating lever 29, the other end of which is mounted revolving around a stationary fulcrum 129.

This construction ensures displacement of the pusher 104 or follower I05 head on a perfectly rectilinear track within the range of the stroke required for the transfer.

The pusher 4 and the followers 5 provided are made in a manner identical to the one illustrated, at least in a manner substantially similar.

With reference to the attached drawings, the transfer wheels 2, 9, 9' and the discharge conveyors 11 are arranged in such a way, whereby the packets follow an L shaped path, according to two substantially perpendicular directions. Advantageously the first direction of displacement of the packets is vertical, from below to above, and during the same, the single stream coming out of the forming wheel 1 is subdivided into two streams parallel to each other and the rate of which is substantially equal to half of the one of the stream coming out of the forming wheel 1. Subsequently, the packets P are made to advance along a substantially horizontal end of the path and which extends itself at a level above the one of discharge of the packets from the forming wheel 1. Thanks to this feature and to the fact that the forming wheel substantially reverses the direction of feed A of the blanks or labels to be folded around the cigarettes wrapped in the external envelopes, the two end discharge conveyors 11 extend themselves above the magazine for feeding the blanks or the labels.

The exit of the discharge conveyors 11 takes place substantially in the same section, in part or on the same side of the machine in correspondence of which the loading of the blanks to form the packets takes place. This gives the considerable advantage of having only one section of the machine which must be necessarily kept accessible for the operations of loading the blanks and for delivering the packets, so that it becomes possible to fit all the necessary devices and operating units on the other sides of the machine. Furthermore, the fact to have both the loading area of the blanks as well as the delivery of the packets on the same side allows for the realization of more rational transit ways for the manual or automatic servicing means that is for feeding the blanks and for delivery and removal of the packets P.

The fact of dividing the single stream of packets into two streams allows for the reduction of the dimensions of the machine at equal dwell time of the packets in the delivery channel. These times are necessary mainly to allow the glue to dry which holds together the blank or the label folded around the cigarettes if necessary wrapped in an inner envelope. At the exit of the end discharge conveyors 11, the rate of delivery of the finished packs is substantially restored identical to the one of the production of the forming wheel 1. Therefore, thanks to the invention the dwell times of the packets coming out of the forming wheel 1 is assured on the delivery track, without increasing said track and therefore without excessive increase of dimensions. All in a relatively economic, simple manner and without having to move the packets along tortuous paths and with part of the paths practically inaccessible or difficult to access by the servicing staff, both manually as well as for simple examination.

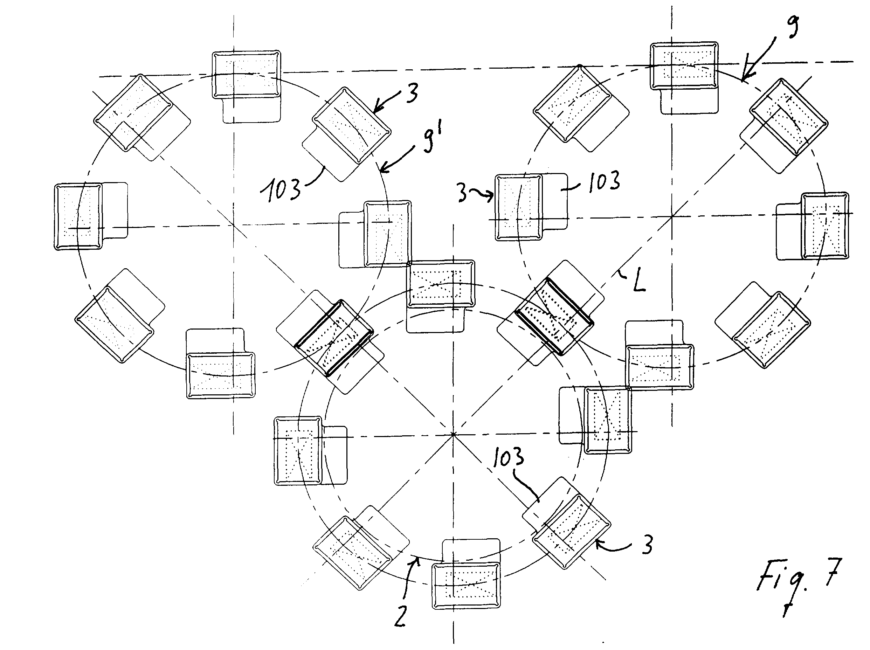

With reference to the alternative embodiment of Fig. 7, it is possible to provide also for alternative arrangements of the three transfer wheels 2, 9, 9'. As a matter of fact, the arrangement according to Fig.s 1 to 6 is dictated by the fact that for a preset radius of the said three wheels a maximum number of seating pockets 3 are provided. In this case, the geometry of the transfer wheels imposes on the two second wheels 9, 9' to overlap each other and therefore the same must be positioned on two opposite faces of the first transfer wheel 2. However when one reduces the number of the seating pockets 3 or increases the radius, then, as evidenced in Fig. 7 it is possible to obtain a configuration in which the two second wheels no longer interfere with each other and therefore the same can be mounted on the same face of the first transfer wheel 2.

While in the embodiment according to the Fig.s 1 to 6, one obtains the maximum number of pockets 3 with the minimum dimension, in the variant according to Fig. 7, one obtains the advantage that the pushers and the followers operate in the same direction for both transfer wheels 2.

According to a further embodiment of the invention, the transfer from the first wheel 2 to the two discharge conveyors 11 takes place by means of a transfer cursor 30. This cursor is mounted slidably in direction perpendicular to the two discharging conveyors and parallel to their superposition plane.

The cursor 30 has two pockets 31, 32, which are at the same distance one from the other as the entrances of the two discharging conveyors 11. The pockets are in the form of a frame which encloses the packets around their peripheral faces parallel to the direction of displacement. The pockets 30 are brought alternatively in position of coincidence with one pocket in the first wheel 2 and with the entrance of one of the discharging conveyors.

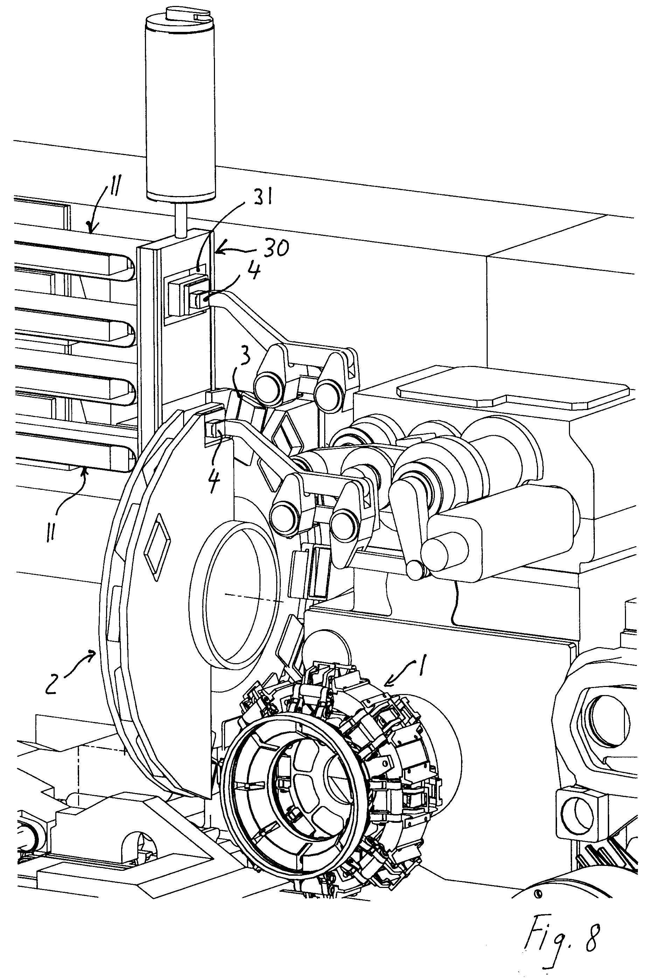

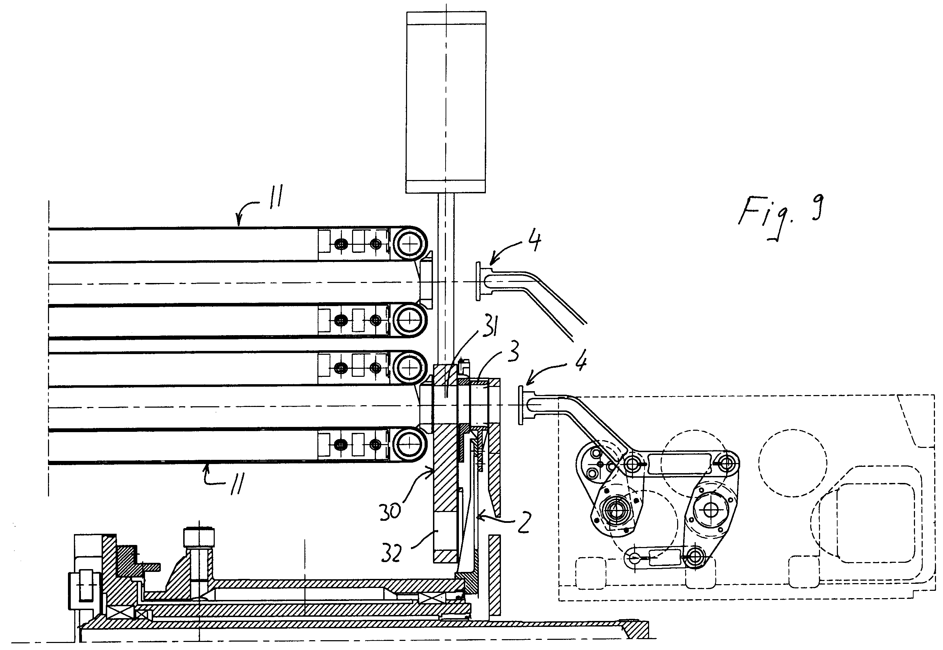

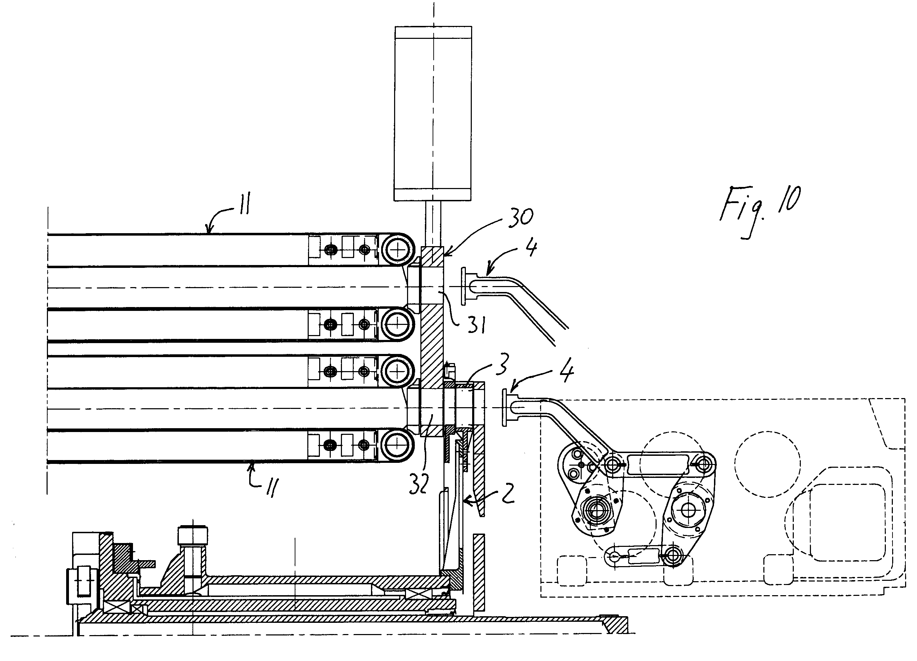

As it appears clearly in the figures 8 to 11 the wheel 2 is positioned relating to the two discharging conveyors in such a way that at each step of rotation of the wheel 2 one of the pockets 3 of the wheel 2 is coincident and aligned with the entrance of one of the two discharging conveyors 11. The pockets 31, 32 and the displacement of the cursor 30 are then arranged in such a way that when one of the pocket is in position of coincidence and alignment with the entrance of the discharging conveyor which is not coincident with the pockets 3 of the wheel 2, the other pocket of the cursor is placed between the entrance of the second discharging conveyor which entrance is coincident with one pocket 3 of the wheel 2 and has the function of forming a channel or window through which the packet can be pushed from the pocket 3 of the wheel 2 directly into the discharging conveyor. The wheel 2 and the cursor are activated in a synchronised way one with respect to the other.

When the cursor moves in the other position the first pocket 31 is brought in coincidence and aligned with the following pocket 3 of the wheel 2 and the corresponding packet is pushed into the said pocket 31 of the cursor 30. In the following step, the cursor is again displaced in the position in which both pockets 31, 32 are brought in coincidence and aligned with the entrance of the respective discharging conveyor. The packet in the first pocket 31 is pushed out of the said pocket 31 and into the corresponding discharging conveyor, while the second pocket 32 is in between of the pocket 3 of the wheel 2 and the entrance of the second discharging conveyor. The packet in the pocket 3 of the wheel is pushed at the same time as the one in the pocket 31 in the corresponding discharging conveyor.

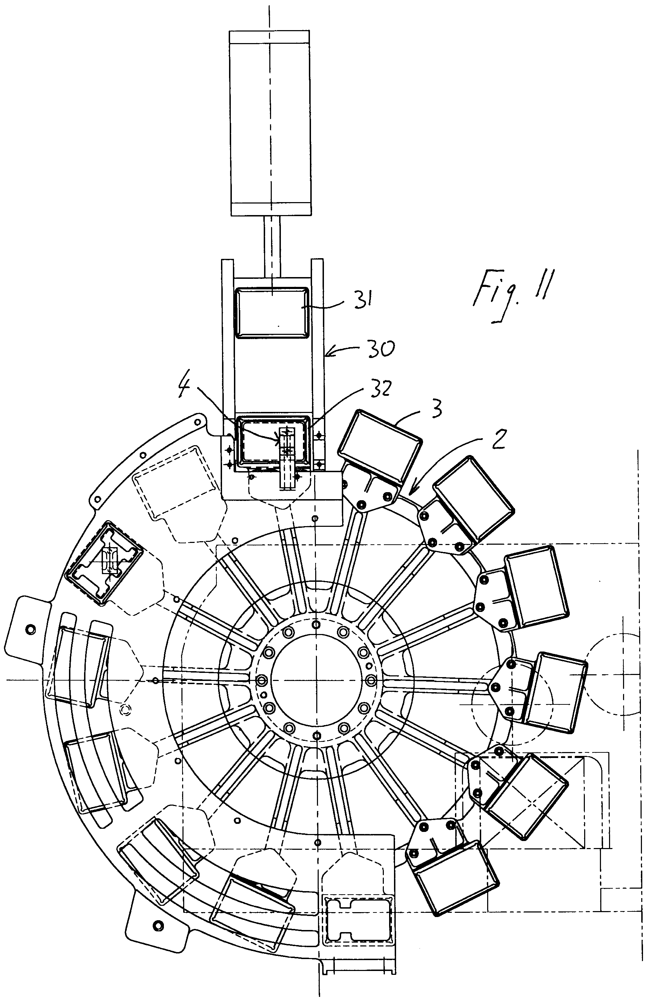

Like the pockets 3 of the first embodiment according particularly to fig. 7, also the pockets 31 and 32 of the cursor may be changed by other pockets having different form and/or dimension for different standard sizes of the packets. In this case the pockets 31 and 32 are releasable mounted on the cursor 30. As it appears clearly from figure 11, the pockets 3, 31 and 32, are arranged in such a way that they have at least one side parallel to each other and to one of the sides of the discharging conveyors. The direction of displacement of the cursor is perpendicular or transversal to the said parallel sides.

In a further improvement of the second embodiment according to figures 8 to 11, there might be provided more than one pair of discharging conveyors 11 each one aligned with one different substantially radial direction of the said transfer wheel 2, while each pair of discharging conveyors 11 is associated with one cursor 30.

Naturally the invention is not limited to the embodiments illustrated and described , but can be widely varied above all constructively. Furthermore the device according to the invention is not limited to the use as delivery conveyor and in cigarette packing machines, but finds use in any production machine, in which it is necessary to have high flows of conveyance with long dwell times of the parts conveyed, offering the possibility to keep the dimensions to a minimum. All without for this abandoning the informative principle described above and claimed hereafter.

## Claims

1. Conveying device, in particular for discharging, for packets, or similar, in particular in the cigarette packing machines, comprising one operating unit (1), for example a so called forming wheel of a packet (P) by wrapping an envelope label or a preformed blank around the product such as cigarettes or similar, if necessary previously wrapped in an inner envelope, the said unit (1) delivering at the exit a sequence of packets (P), especially cigarette packets and conveyor means to discharge the packets
characterized by the fact that
the conveyor means for discharging have means (2, 4, 5, 9, 9', 11) for dividing the stream of packets that exit from the operating unit of production or of supply (1) into two streams of packets which are contemporaneous and perfectly synchronized between each other.

2. Device according to claim 1, characterized by the fact that the two streams are parallel and branch out (2, 9, 9') at an intermediate point of the path of the conveyor discharging the packets downstream of the operating unit of production or of supply (1).

3. Device according to the claims 1 or 2, characterized by the fact that each partial stream of conveyance (9, 9', 11) has a rate corresponding substantially to half the total rate defined by the frequency of supply of the operating unit of production and/or supply (1).

4. Device according one or more of the preceding claims, characterized by the fact that the path of conveyance has exclusively two directions of conveyance transversal to each other.

5. Device according to the claim 4, characterized by the fact that the operating unit (1) has further at least one feeder, that supplies to the same the pieces to be processed following a preset path from a feed hopper of said pieces and said path extends itself at least according to one direction, while at least one section of the path of the discharge conveyor (2, 9, 9' 11), if not the entire path of the same, before the subdivision into two streams and/or after the subdivision into two streams, is substantially oriented according to one of the at least one direction of supply of the pieces submitted for processing to the operating unit of production (1) but with a direction of advancement contrary to said pieces.

6. Device according to the claim 5, characterized by the fact that at least part of the path of the discharge conveyors (2, 9, 9') extends itself transversally to the direction of delivery of the pieces to the operating forming unit (1) while the remaining part of the discharge conveyor (11) is parallel to said direction of delivery of the pieces being processed at the operating unit (1) of production is laterally staggered or above or below said path of delivery of the pieces in manufacture.

7. Device according to one or more of the preceding claims, characterized by the fact that it comprises two parallel lines of discharge (11) which are served contemporaneously by the packet transfer means (2, 9, 9') which are loaded at the same time with the actual packets (9).

8. Device according to one or more of the preceding claims, characterized by the fact that the transfer means comprise a first transfer wheel (2) having a plurality of seating pockets (3) distributed equidistant along the periphery of the same, and said pockets are constituted by frames with axes parallel to the axis of rotation of the first wheel (1) and of a shape complementary to the packets (P) to be seated, as well as open on both sides parallel to the face of the first transfer wheel (2), delivery means (4, 5) of one finished packet at a time in a respective seating pocket (3) of the first transfer wheel (2) and the subsequent second transfer wheels (9, 9') these also with a plurality of peripheral pockets (3) to house the packets (P) analogous to the ones of the first transfer wheel (2) each of these second wheels (9, 9') partially overlap the first wheel (2) and is driven in a synchronized manner with the same, so that the two second wheels of transfer (9, 9') reach contemporaneously the position of alignment each with its own seating pocket (3) with a different full seating pocket (3) of the first transfer wheel (2), while pusher means (4, 5) are provided which contemporaneously for the two second wheels (9, 9') unload the packet from the associated pocket (3) of the first transfer wheel (2) to the coinciding pocket (3) of the corresponding second wheel of transfer (9, 9').

9. Device according to the claim 8, characterized by the fact that contemporaneously with their loading with a packet (P) in a pocket (3) in a different angular position, preferably substantially diametrically opposite, the two second wheels (9, 9') have a seating pocket (3) in position coinciding with the entrance of further means of conveyance (11), pusher means (4, 5) being provided that unload the packet (P) from the second wheel (9, 9') onto the further conveyor (11) associated with it.

10. Device according to the claims 8 and 9, characterized by the fact that the wheels (2, 9, 9') are made to advance in steps in a synchronous manner between each other, the first transfer wheel (2) being driven in steps of advancement corresponding to the frequency of delivery of the packets (P) from the production unit (1), while the two second wheels (9, 9') rotate in steps with a frequency substantially halved relative to the one of the associated first transfer wheel (2).

11. Device according to one or more of the preceding claims 8 to 10, characterized by the fact that with regards to the direction of advancement of the packets (P) or to one of at least two directions of advancement of the same, the transfer wheels (2, 9, 9') are arranged with their axes oriented parallel to said direction or said axes are oriented substantially parallel to the direction of delivery of the packets from the operating unit of production or of supply (1)

12. Device according to the claim 11, characterized by the fact that the two second transfer wheels (9, 9') are oriented parallel to the first transfer wheel (2) and are both arranged staggered towards the same side of the first transfer wheel, in particular or preferably in direction of the top side.

13. Device according to the claim 12, characterized by the fact that one of the two second wheels (9) overlaps one face of the first wheel (2) while the other of two second wheels (9') overlaps the opposite face of the first wheel (2).

14. Device according to the claim 13, characterized by the fact that the two second transfer wheels (9, 9') overlap each other at the area aligned with the axis of rotation of the first wheel (2) the axes of rotation of the two second wheels (9, 9') being arranged at the vertices of the base of an isosceles triangle, at the other vertex of which is foreseen the axis of the first transfer wheel (2).

15. Device according to one or more of the preceding claims, characterized by the fact that the two second transfer wheels (9, 9') and the discharge conveyors (11) are arranged and made in such a manner, that the packets (P) follow a path substantially identical.

16. Device according to one or more of the preceding claims, characterized by the fact that the transfer wheels (2, 9, 9') are driven by the same motor thanks to a cinematic chain (6, 6', 6'', 6''', 6'''') and a ring (7) of rollers (107) fitted coaxially to each wheel rotating around radial axes (207) and engaging with a desmodromic cam with a substantially elicoidal track.

17. Device according to one or more of the preceding claims, characterized by the fact that the two further conveyors, each of which is provided downstream of a respective second transfer wheel (9,9'), are parallel to each other and are substantially oriented in a direction parallel to the one of advancement of the packets from the operating unit of production (1) to the first wheel (2) and from this one to the two second wheels (9).

18. Device according to one or more of the preceding claims, characterized by the fact that the two conveyors (11) downstream of the transfer wheels (9, 9') have the function of storage and are constituted by pairs of parallel conveyor bands (111, 211) which form between them a channel for housing the packets, in where the packets adhere with opposite sides to each of the two bands (111, 211).

19. Device according to one or more of the preceding claims, characterized by the fact that the section of the path the packets (P) take on the transfer wheels (2, 9, 9') are vertical and upwards, while the section of the path in the conveyors downstream of the two second transfer wheels (9, 9') is horizontal and at an upper level.

20. Device according to one or more of the preceding claims, characterized by the fact that for the transfer of the packets (P) between the transfer wheels (2, 9, 9') and to this one or from these to the conveyors (11), pusher means (4) and cooperating followers (5) are provided that move the packets closing it between them in correspondence to the opposed parallel sides at the open sides of the seating pockets (3) on the transfer wheels (2, 9, 9'), the said pusher/followers are driven by articulated polygons that in their turn derive the motion from cams driven by the same cinematic chain (6, 6', 6'', 6''', 6'''') driving the transfer wheels (2, 9, 9').

21. Device according to one or more of the preceding claims, characterized by the fact that the seating pockets (3) are bolted in a removable manner (203) to the transfer wheels (2, 9, 9') different sizes of seating pockets being foreseen for different sizes of packets (P) and the bolting means (103) being made identical for the pockets (3, 3') for any size.

22. Device according to one or more of the preceding claims, characterized by the fact that with reference to the line of conjunction between the axes of each of the two second wheels (9, 9') and with the first transfer wheel, the possible dimensional increase or possible dimensional decrease of the pockets (3, 3') in a direction circumferential or tangential, or secant to said transfer wheels (2, 9, 9') is made only with reference to the section of said seating pockets (3) that is on a predetermined side of said line of conjunction, at least in the circumferential, tangential or secant direction.

23. Packing machine for cigarettes, with a conveying device according to one or more of the preceding claims 1 to 22, characterized by the fact that it has an operating unit of production a wheel to form a rigid or soft cigarette packet (P), the said forming wheel (1) is driven in steps of rotation around an axis perpendicular to the axis of rotation of the first transfer wheel (2); a station supplying the packets (P) from the forming wheel (1) to the respective lower pocket (3) of the first wheel of transfer (2); two second wheels of transfer (9, 9') arranged above the first wheel of transfer (2), two parallel discharge conveyors (11) which extend themselves horizontally at a higher level with regards to the storage unit supplying the blanks to form the packets and which are fed to the forming wheel (1) in a direction parallel to the direction of conveyance of the packets (P) in the discharge conveyors (11), but at a level lower than the forming wheel (1) and in a direction of advancement opposite to the one of the packets (P) in the discharge conveyors (11), while the exit of the latter are substantially provided in the area of entrance of the supply of the blank storage unit.

24. Device according to one or more of the preceding claims, characterized by the fact that in an alternative it is used as a feeder of parts to be processed on a making machine.

25. Device according to one or more of the preceding claims, characterized by the fact that it has a ratio of the diameter of the three wheels (2, 9, 9'), of dimensions of the seating pockets (3) and number of the seating pockets (3) such that the two second transfer wheels (9, 9') do not superimpose each other and overlap the same side of the first transfer wheel (2).

26. Device according to one or more of the preceding claims, characterised in that it comprises
- a first transfer wheel (2) with at least one peripheral pocket (3), the said wheel being rotatable around it axis,
- at least two discharge conveyors with a certain relative position and which entrance openings are facing the transfer wheel (2),
- a second transfer unit being formed by a cursor (30) showing at least two pockets (31, 32) and slidable in such a way to bring alternatively one pocket (31, 32) in coincidence and alignment with one or the at least one pocket (3) of the transfer wheel (2) and the other pocket (31, 32) with the entrance of one of the two discharging conveyors (11).

27. Device according to one or more of the preceding claims, characterised in that
- the pockets (3) of the transfer wheel (2) and of the cursor (30) being opened or at least may be opened at the sides facing each other and at the sides facing the discharging conveyors (11),
- and being provided at least pushers for transferring the packet housed in the pocket or in one of the pockets of the transfer wheel (2) to the pocket (31, 32) of the cursor (30) and from these ones to the entrance of the discharging conveyors (11)

28. Device according to one or more of the preceding claims, characterised in that the transfer wheel (2), the cursor (30) and the discharging conveyors (11) are positioned to each other in such a way that when one pocket (31) of the cursor (30) is coincident and aligned with one of the discharging conveyors (11), the other pocket (32) of the cursor is placed between the or one pocket (3) of the transfer wheel (2) and the entrance of the second discharging conveyor (11),
and the said second discharging conveyor (11) is coincident and aligned with the said or one of the said pockets (3) of the transfer wheel (2) while the pocket (32) of the cursor (30) is coincident and aligned with the discharging conveyor (11) and with the said or one of the said pockets (3) of the transfer wheel (2).

29. Device according to one or more of the preceding claims, characterised in that the two discharging conveyors are placed substantially aligned one to the other along a radial direction of the transfer wheel (2), while the cursor (30) is slidable along the said substantially radial direction.

30. Device according to one or more of the preceding claims characterised in that there are provided more than one pair of discharging conveyors each one aligned with one different substantially radial direction of the said transfer wheel (2), while each pair of discharging conveyors (11) is associated with one cursor (30).

31. Device according to one or more of the preceding claims, characterised in that the pockets (31, 32) of the cursor (30) and the pockets (3) of the transfer wheel (2) are releasable mounted to the said cursor (30) and to the said transfer wheel (2) for replacement with other pockets, for housing packets having different sizes of forms.
